Europäisches Patentamt

European Patent Office

Office européen des brevets

(11) Veröffentlichungsnummer: **0 188 779**
**A1**

## (12) EUROPÄISCHE PATENTANMELDUNG

(21) Anmeldenummer: 85116254.5

(22) Anmeldetag: 19.12.85

(51) Int. Cl.⁴: **G06F 7/52**

(30) Priorität: 27.12.84 DE 3447473

(43) Veröffentlichungstag der Anmeldung:
30.07.86 Patentblatt 86/31

(84) Benannte Vertragsstaaten:
AT DE FR GB IT NL SE

(71) Anmelder: **Siemens Aktiengesellschaft**
**Berlin und München Wittelsbacherplatz 2**
**D-8000 München 2(DE)**

(72) Erfinder: **Wilhelm, Wilhelm, Dr.**
**Geigenbergerstrasse 23**
**D-8000 München 71(DE)**

(54) Schneller digitaler Multiplizierer.

(57) Zur Verringerung der Multiplikationszeiten von seriell arbeitenden Multiplizierern ist das taktgesteuerte Rechenwerk mit Registern (20, 21, 90, 91, 70, 71) zweizeilig aufgebaut. Eine Zeile des Rechenwerks und der Register (20, 21, 90, 91, 70, 71) wird jeweils entweder vom Takt (T) oder Gegentakt (T̄) gesteuert. Die Ein- und Ausgangsschieberegister (20, 21, 70, 71) sind nur für die halbe Datenwortlänge ausgelegt und enthalten jeweils nur Bits mit grader oder ungrader Wertigkeit. Zur Speicherung der Zwischensummen und Überträge sind Latches vorgesehen, so daß mit einer Taktperiode beide Zeilen abgearbeitet werden.

FIG 3

EP 0 188 779 A1

Schneller digitaler Multiplizierer

Die vorliegende Erfindung betrifft einen digitalen seriell arbeitenden Multiplizierer nach dem Oberbegriff des Patentanspruches 1.

Schnelle digitale Multiplizierer besitzen große Bedeutung in der digitalen Signalverarbeitung bei Echtzeitanwendungen oder bei einem großen Dynamikbereich. Beispielsweise stehen für Bildverarbeitungsroutinen · bei einem hochauflösenden bewegten Bild nur ca. 50 ns zur Verfügung, während zur feinen Helligkeitsabstufung eine Datenwortbreite von 16 oder mehr als 16 binären Stellen notwendig ist. Ein schneller 16X16-Bit-Multiplizierer der Typ MPY 016 K der Fa. TRW Vertriebs-GmbH ist in der Zeitschrift Elektronik, Nr. 4, 1984 auf Seite 100 vorgestellt, der eine typische Zykluszeit von 45 ns besitzt.

Grundsätzlich lassen sich zwei Multiplizierverfahren unterscheiden. Parallel arbeitende Multiplizierer sind in ihrer Struktur dreidimmensional als nxn große Matrix mit Halb- bzw. Volladdierern aufgebaut, wobei n die Anzahl der binären Stellen eines Datenwortes angibt. Die Multilikationszeiten sind gering und betragen etwa das n-fache der Addiererlaufzeiten, wenn man einen Carry-Look-ahead - (parallele Übertragslogik) verwendet, bei der alle Überträge direkt aus den Eingangsvariablen berechnet werden. Bei großen Datenwortbreiten besitzen parallele Multiplizierer eine hohe Verlustleistung und eine große aktive Chipfläche, da der Aufwand etwa quadratisch mit der Datenwortbreite ansteigt; dadurch steigen die Hermit großen Datenwortbreiten eine große aktive Chipfläche, speziell bipolare Multiplizierer auch eine hohe Verlustleistung; dadurch steigen die Herstellungskosten entsprechend und die Ausbeuten sinken.

Bei seriell arbeitenden Multiplizierern wird nur eine Zeile der Matrix gebraucht, die mit Hilfe eines aus Master-Slave-Flip-Flops bestehenden Zwischenspeichers n-mal hintereinander zur Addition verwendet wird. Die Multiplikationszeiten hängen bei seriellen Multiplizierern im wesentlichen von der Taktfrequenz ab, da bei der Ausführung einer Multiplikation die erforderliche Anzahl der Takte proportional zur Datenwortbreite ist. Die durch die extern erzeugten Taktsignale bestimmte Verarbeitungsgeschwindigkeit beträgt ein Mehrfaches gegenüber parallel arbeitenden Multiplizierern, dagegen reduzieren sich Aufwand und Verlustleistung um ein Vielfaches.

Der Erfindung liegt die Aufgabe zugrunde, einen digitalen seriell arbeitenden Multiplizierer anzugeben, der kurze Multiplizierzeiten und eine hohe Verarbeitungsgeschwindigkeit erlaubt.

Diese Aufgabe wird bei einem digitalen seriell arbeitenden Multiplizierer der eingangs genannten Art erfindungsgemäß durch die Merkmale des kennzeichnenden Teils des Patentanspruchs 1 gelöst.

Weitere Ausgestaltungen des Erfindungsgedankens sind in Unteransprüchen gekennzeichnet. Die Erfindung wird im folgenden anhand von in den Figuren der Zeichnung dargestellten Ausführungsbeispielen näher erläutert. Es zeigt:

Fig. 1 ein Blockschaltbild eines digitalen seriell arbeitenden Multiplizierers nach dem Stand der Technik,

Fig. 2 ein Blockschaltbild einer Addierer-Register-Stelle eines Multiplizierers nach Fig. 1,

Fig. 3 ein Blockschaltbild eines erfindungsgemäßen digitalen seriell arbeitenden Multiplizierers und

Fig. 4 eine Addierer-Register-Stelle eines erfindungsgemäßen Multiplizierers nach Fig. 3.

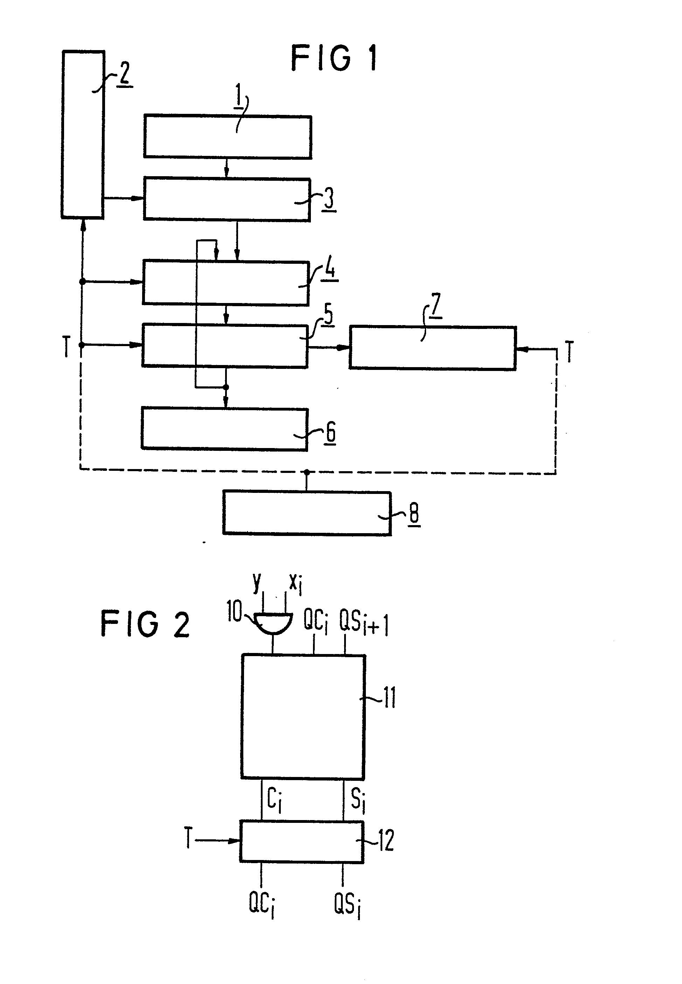

Ein digitaler seriell arbeitender Multiplizierer nach Fig. 1 enthält ein statisches Register $\underline{1}$ zur Speicherung des ersten Datenworts und ein Schieberegister $\underline{2}$ zur Speicherung des zweiten Datenworts. Beim seriellen Verfahren beruht die Multiplikation darauf, daß jedes Bit des einen Datenworts mit dem anderen Datenwort multipliziert wird, wozu die UND-Gatter $\underline{3}$ dienen. Die den einzelnen Bits des ersten Datenworts zugeordneten Zwischensummen werden dann in einem Rechenwerk aufsummiert. Das Rechenwerk enthält die Addiererlogik $\underline{4}$ und Register $\underline{5}$ zur Zwischenspeicherung der Überträge und der Zwischensummen. Die vom Rechenwerk auszuführenden Summationen lassen sich durch eine parallele Übertragslogik, das Carry-look-ahead Addierwerk $\underline{6}$ beschleunigen, das alle Überträge direkt aus den Eingangsvariablen des Rechenwerks berechnet. Die ersten n Produktbits mit niedrigster Wertigkeit gelangen aus dem Register $\underline{5}$ in ein Ausgangsschieberegister $\underline{7}$, aus dem sie ausgelesen werden können, und die zweiten n Produktbits stehen am Ausgang des Carry-look-ahead Addierwerks $\underline{6}$ zur Verfügung. Die Register $\underline{2}$, $\underline{5}$ und $\underline{7}$ sowie die Addiererlogik $\underline{4}$ werden vom Takt eines Taktgenerators $\underline{8}$ gesteuert.

Die in Fig. 2 dargestellte Addierer-Register-Stelle enthält einen Volladdierer 11 und ein aus Master-Slave-Flip-Flops bestehendes Register 12. Der Volladdierer 11 wird von der logischen Konjunktion eines Bits $x_i$ des ersten Datenworts und einem Bit y des zweiten Datenworts sowie dem zwischengespeicherten Übertrag $QC_i$ des Registers 12 und dem Summenbit $QS_{i+1}$ des nächsthöherwertigen Registers für Zwischensummen angesteuert. Das Ergebnis der logischen Addition steht als die Summe $S_i$ und der Übertrag $C_i$ am Ausgang des Addierers 11 zur Verfügung und gelangt in das durch den Takt T gesteuerte Register 12, an dessen Ausgang die zwischengespeicherte Summe $QS_i$ für den nächst niederwertigen Volladdierer und der zwischengespeicherte Übertrag $QC_i$ zur Rückkopplung auf einen Eingang des Addierers 11 anliegen. In jeder Taktperiode T wird damit ein Bit y des zweiten Datenwortes mit den Bits $x_i$ des ersten Datenwortes multipliziert und die Zwischensummen aufsummiert.

Der Erfindung liegt der Gedanke zugrunde, mit jeder Taktperiode nunmehr zwei Bits des zweiten Datenwortes mit dem ersten Datenwort zu multiplizieren und zur Steuerung sowohl den Takt als auch den Gegentakt zu verwenden. Da vor allem bei langen Datenwörtern ab n = 16 Bits bei seriellen Verfahren das Durchschieben der einzelnen Bits durch die taktgesteuerten Schieberegister erheblich Zeit beansprucht, läßt sich mit dem erfindungsgemäßen digitalen seriell arbeitenden Multiplizierer die Multiplikationszeit drastisch verringern. Dazu werden die Ein- und Ausgangsschieberegister $\underline{2}$ und $\underline{7}$ sowie die Addiererlogik $\underline{4}$ und die Zwischenregister $\underline{5}$ zweizeilig aufgebaut. Das nicht taktgesteuerte statische Register $\underline{1}$, die UND-Register $\underline{3}$ und das Carry-look-ahead Addierwerk $\underline{6}$ bleiben entweder gleich oder lassen sich problemlos adaptieren. Beispielsweise ist es vorteilhaft, die Zahl der UND-Gatter zu verdoppeln, so daß an den ersten n Gattern die Bits des vom Takt gesteuerten Eingangsschiebers und an den zweiten n Gattern die Bits des vom Gegentakt gesteuerten Eingangsschieberregisters anliegen.

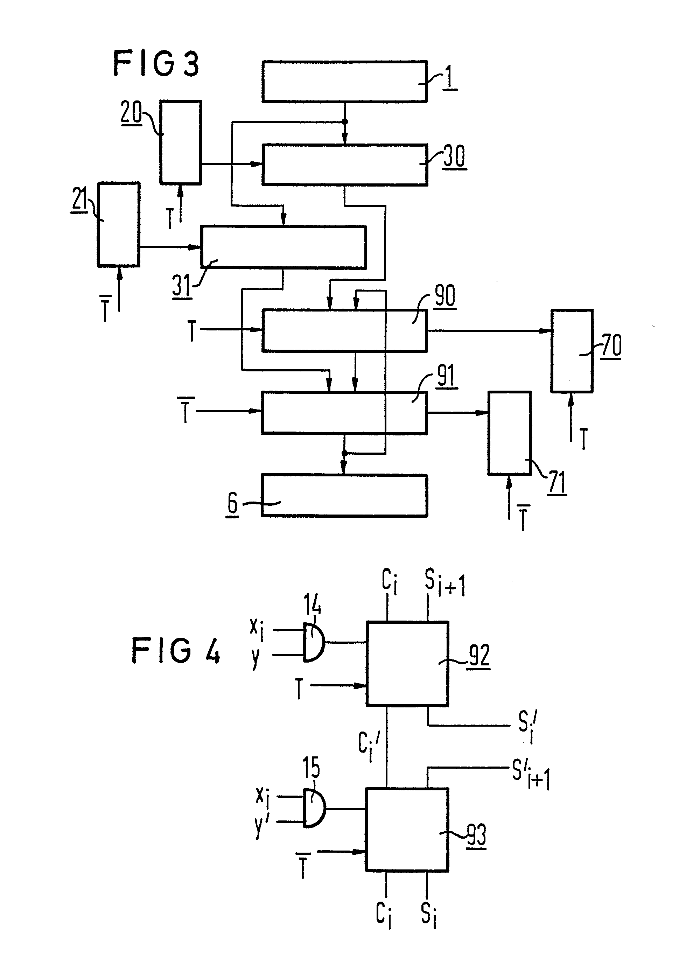

Fig. 3 stellt ein Blockschaltbild eines erfindungsgemäßen digitalen seriell arbeitenden Multiplizierers dar. Gleiche Elemente wie in Fig. 1 sind mit gleichen Bezugszeichen versehen. Das erste Datenwort ist im statischen Register 1 abgespeichert, das zweite Datenwort in den taktgesteuerten Registern 20 und 21, die jeweils halbe Datenwortlänge umfassen. Das Register 20 wird vom Takt T gesteuert, das Register 21 vom Gegentakt T . Um eine weitgehende Sicherheit gegenüber Störungen zu gewährleisten, ist es vorteilhaft in einem der beiden Register 20 oder 21 jeweils nur Bits mit grader Wertigkeit, im anderen Register nur Bits mit ungrader Wertigkeit zu speichern. Jeweils bei einem Takt T und einem Gegentakt T werden die einzelnen Bits aus den Registern 20 und 21 ausgelesen und durch die UND-Gatter 30 und 31 mit den Bits des ersten Datenwortes verknüpft.

Erfindungsgemäß sind nun die in Fig. 1 beschriebenen, aus Master-Slave-Flip-Flops bestehenden Register 5 zur Zwischenspeicherung der Überträge und der Zwischensummen durch Latches ersetzt. Es ist vorteilhaft, die Addiererlogik des Rechenwerks mit der Eingangsstufe der Latches zu kombinieren, so daß diese eine Einheit bilden. Diese erfindungsgemäßen Blöcke sind als die Addierer-Register 90 und 91 bezeichnet. Jeweils ein Register aus Latches wird mit dem Takt T, im Ausführunsbeispiel das Addiererregister 90, das andere Register aus Latches mit dem Gegentakt T angesteuert, im Ausführungsbeispiel das Addierer-Register 91. Die Eingänge der Addierer-Register 90 und 91 sind mit den Ausgängen der UND-Gatter 30 bzw. 31 verbunden und mit den jeweils korrespondierenden Addierer-Registerzellen zur Übernahme der Überträge und der zugeordneten Zwischensummen.

Die Überträge selbst werden nach dem Stand der Technik mit Hilfe eines an sich bekannten Carry-look-ahead Addierwerks 6 direkt aus den Eingangsvariablen berechnet.

Die ersten n Produktbits niedrigster Wertigkeit werden von den Addierer-Registern 90 und 91 in die Ausgangsschieberegister 70 und 71 ausgelesen, die jeweils wieder vom Takt T bzw. vom Gegentakt T gesteuert werden. Beide Register 70 und 71 besitzen wiederum lediglich die halbe Datenwortlänge n/2, speziell enthalten sie wiederum nur entweder die geraden Produktbits oder die ungraden Produktbits. Die zweiten n Produktbits lassen sich aus dem Carry-look-ahead Addierwerk 6 auslesen.

Fig. 4 stellt zwei erfindungsgemäße Addierer-Registerstellen dar. Das UND-Gatter 14 ist im Block 30 nach Fig. 3 enthalten und verknüpft ein Bit $x_i$ des ersten Datenwortes mit dem vom Takt T ausgelesenen Bit y des zweiten Datenwortes, das UND-Gatter 15 des Blockes 31 das Bit $x_i$ des ersten Datenwortes mit dem Bit y' des vom Gegentakt T gesteuerten Eingangsschieberegisters. Die jeweiligen Verknüpfungen liegen jeweils an einem Eingang des Addierer-Registers 92, der vom Takt T gesteuert wird, bzw. des vom Gegentakt T gesteuerten Addierer-Registers 93. An den beiden anderen Eingängen des Addierer-Registers 92 liegen der rückgekoppelte Übertrag $C_i$ und die Zwischensumme $S_{i+1}$ der nächsthöherwertigen Stufe. Der am Ausgang des Latches liegende Übertrag C - bildet einen Eingang des nächsten Addierer-Registers 93, der andere Ausgang $S_i'$ wird mit der nächstniederwertigen Stufe verbunden. Den anderen Eingang des Addierer-Register 93 bildet die Zwischensumme $S_{i+1}'$ der nächsthöherwertigen Stufe, und an den Ausgängen von 93 liegen der Übertrag $C_i$ und die Zwischensumme $S_i$.

Durch die Ausbildung der Register als Latches und die Verknüpfung der Addiererlogik mit der Eingangsstufe der Latches werden weitgehend zusätzliche Laufzeitbeschränkungen durch die Register vermieden. Durch die Gegentaktsteuerung der Latches werden mit einem Takt zwei Zeilen abgearbeitet, so daß die Multiplikationszeit das n/2-fache der Taktperiodendauer plus der vom Carry-look-ahead Addierwerk 6 benötigten Zeit beträgt.

Zur Verringerung der Multiplikationszeit ist es auch weiterhin vorteilhaft, die Taktfrequenz und die Logiklaufzeit aufeinander abzustimmen. Diese Ausgestaltung ist Gegenstand der korrespondierenden Anmeldung VPA 84 E 5301 DE. Darin wird vorgeschlagen, die Taktfrequenz intern zu generieren und dazu Gatter vorzusehen, die in ihrem Aufbau dem Aufbau der Gatter des Rechenwerks entsprechen. Die Taktfrequenz muß allerdings ausreichend weit unter der Laufzeitgrenze des Rechenwerks liegen.

Ein erfindungsgemäßer Multiplizierer läßt sich in den zum Stand der Technik gehörenden Technologien realisieren, beispielsweise in TTL- oder ECL-Logik, die kürzesten Multiplikationszeiten ergeben sich bei einer Realisierung in Stromschaltertechnik. Beispielsweise benötigt ein erfindungsgemäßer serieller 32 x 32 Bit-Multiplizierer etwa 10% weniger Multiplikationszeit, ca. 57% weniger Verlustleistung, ca. 78% weniger Bauelemente und etwa 71% weniger aktiver Chipfläche als ein paralleler digitaler Multiplizierer in gleicher Technologie.

**Ansprüche**

1. Digitaler seriell arbeitender Multiplizierer mit einem statischen Register UND-Gattern, mit einem taktgesteuerten Rechenwerk nebst Registern, **gekennzeichnet** durch einen doppelzeiligen Aufbau des taktgesteuerten Rechenwerks nebst Registern ( 20, 21, 90, 91, 70, 71, 6).

2. Digitaler seriell arbeitender Multiplizierer nach Anspruch 1, **dadurch gekennzeichnet**, daß eine Zeile des taktgesteuerten Rechenwerks nebst Registern (20, 21, 90, 91, 70, 71, 6) vom Takt (T), die andere vom Gegentakt (T) gesteuert wird.

3. Digitaler seriell arbeitender Multiplizierer nach Anspruch 1 und 2, **dadurch gekennzeichnet**, daß je ein taktgesteuertes Schieberegister (20, 21, 70, 71) entweder nur Bits mit grader oder ungrader Wertigkeit verarbeitet.

4. Digitaler seriell arbeitender Multiplizierer nach Anspruch 1 bis 3, **dadurch gekennzeichnet**, daß die taktgesteuerten Schieberegister (20, 21, 70, 71) halbe Datenwortlängen besitzen.

5. Digitaler seriell arbeitender Multiplizierer nach Anspruch 1 bis 4, **dadurch gekennzeichnet**, daß die für das taktgesteuerte Rechenwerk (90, 91, 6) benötigten Register nur Latches enthalten.

6. Digitaler seriell arbeitender Multiplizierer nach Anspruch 1 bis 5, **dadurch gekennzeichnet**, daß die Addiererlogik (4) mit der Eingangsstufe der aus Latches bestehenden Register kombiniert ist.

7. Digitaler seriell arbeitender Multiplizierer nach einem der Ansprüche 1 bis 6, **gekennzeichnet durch** eine interne Taktgenerierung.

8. Digitaler seriell arbeitender Multiplizierer nach einem der Ansprüche 1 bis 7, **dadurch gekennzeichnet**, daß die Addiererlogik mit Registern (90, 91 ) ein zusätzliches, asynchron arbeitendes Carry-look-ahead Addierwerk (6) enthält.

9. Digitaler seriell arbeitender Multiplizierer nach einem der Ansprüche 1 bis 8, **dadurch gekennzeichnet**, daß die Taktgenerierung mit Gattern erfolgt, die technologisch den Gattern des Rechenwerks (90, 91, 6) entsprechen.

10. Digitaler seriell arbeitender Multiplizierer nach Anspruch 1 bis 9, **dadurch gekennzeichnet**, daß zur Taktgenerierung ein Ringoszillator dient.

11. Digitaler seriell arbeitender Multiplizierer nach Anspruch 1 bis 10, **dadurch gekennzeichnet**, daß die Taktfrequenz unterhalb der möglichen Arbeitsfrequenz der Gatter des Rechenwerks (90, 91, 6) liegt.

12. Digitaler seriell arbeitender Multiplizierer nach einem der Ansprüche 1 bis 11, **gekennzeichnet durch** einen Aufbau aus ECL-Stromschaltern.

# FIG 1

# FIG 2

**FIG 3**

**FIG 4**

Europäisches
Patentamt

**EUROPÄISCHER RECHERCHENBERICHT**

Nummer der Anmeldung

EP 85 11 6254

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | FR-A-2 320 602 (C.I.T.-ALCATEL) <br> * Seite 2, Zeile 26 - Seite 3, Zeile 29; Abbildung ·· * | 1 | G 06 F 7/52 |
| A | | 3,4 | |
| | --- | | |
| A | PATENTS ABSTRACTS OF JAPAN, Band 6, Nr. 209 (P-150) [1087], 21. Oktober 1982; & JP - A - 57 114 941 (TOKYO SHIBAURA DENKI K.K.) 17.07.1982 <br> * Zusammenfassung; Abbildung * | 2 | |
| | --- | | |
| A | RADIO FERNSEHEN ELEKTRONIK, Band 32, Nr. 8, August 1983, Seiten 487-490, Ost-Berlin, DD; F. MARKERT: "Schnelle Arithmethik für Mikrorechner" <br> * Seite 488, Spalte 3, Zeile 13 - Seite 489, Spalte 3, Zeile 41; Bild 1 * | 7-9,11 | RECHERCHIERTE SACHGEBIETE (Int. Cl.4) <br><br> G 06 F 7/00 |
| | ----- | | |

Der vorliegende Recherchenbericht wurde für alle Patentansprüche erstellt.

| Recherchenort <br> DEN HAAG | Abschlußdatum der Recherche <br> 21-03-1986 | Prüfer <br> NUSSBAUMER C.P. |
|---|---|---|